# EUROPÄISCHE PATENTSCHRIFT

(11) **EP 2 595 083 B1**
(45) Veröffentlichungstag und Bekanntmachung des Hinweises auf die Patenterteilung: **05.07.2017**
(21) Anmeldenummer: 13155097.2
(22) Anmeldetag: 20.10.2008
(51) Int. Cl.: G06F 21/30, G06F 21/77, H04L 9/30, H04L 9/32

(54) **Verfahren zum Schutz einer Chipkarte gegen unberechtigte Benutzung, Chipkarte und Chipkarten-Terminal**
Method for protecting a chip card against unauthorised use, chip card and chip cards terminal
Procédé destiné à protéger une carte à puce contre les utilisations non autorisées, carte à puce et terminal de carte à puce

(30) Priorität: 29.10.2007 DE 102007000589
(43) Veröffentlichungstag der Anmeldung: 22.05.2013
(62) Teilanmeldung aus: 08845554.8
(73) Patentinhaber: Bundesdruckerei GmbH, 10969 Berlin (DE)
(72) Erfinder: Nguyen, Kim, Dr., 10437 Berlin (DE); Byszio, Frank, 16348 Wandlitz (DE)
(74) Vertreter: Richardt Patentanwälte PartG mbB

(56) Entgegenhaltungen:
- EP-A1- 1 752 937
- US-A1- 2002 129 247
- Bruce Schneier: "Applied Cryptography, Protocols, Algorithms, and Source Code in C" In: "Applied Cryptography, Protocols, Algorithms, and Source Code in C", 1. Januar 1996 (1996-01-01), John Wiley & Sons, New York, XP055056127, Seiten 513-525, * Seite 513 - Seite 525 *
- Christian Hainz: "Kryptographie und elliptische Kurven", , 1. April 2001 (2001-04-01), Seiten 2-14, XP055056091, Gefunden im Internet: URL:http://homepages.thm.de/~hg10013/Lehre /MMS/SS01_WS0102/Elyps/index.html [gefunden am 2013-03-12]
- BRUCE SCHNEIER: "Applied Cryptography", 1996, JOHN WILEY AND SONS, XP002520924, * Seite 28, Absatz 1 - Seite 29, Absatz 4 *

## Beschreibung

Die Erfindung betrifft ein Verfahren zum Schutz einer Chipkarte gegen unberechtigte Benutzung, eine Chipkarte und ein Chipkarten-Terminal.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Bei den PINs kann zwischen statischen und änderbaren Pins unterschieden werden. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unterbinden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Maximalwert stehenden Fehleingabezähler (wird auch als "Fehlbedienungszähler" bezeichnet) einer PIN wieder zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1). Durch solche Verfahren ist eine sog. Erstbenutzerfunktion gegeben, die dem autorisierten Benutzer Sicherheit darüber verschafft, dass vor dessen Erstbenutzung keine unerlaubte Nutzung der Chipkarte durch einen Dritten stattgefunden hat.

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte in einen Benutzt-Status gesetzt werden. Eine spätere Änderung der persönlichen Geheimzahl wird durch einen übergeordneten Entsperrcode ermöglicht.

Aus dem Stand der Technik sind auch bereits Verfahren zur Überprüfung einer Kennung bekannt geworden, bei denen die Übertragung der Kennung selbst nicht erforderlich ist, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus www.heise.de/security/news/meldung/85024 ist das PACE-Protokoll bekannt, welches sich besonders für elliptische Kurven-Kryptographie eignet.

Demgegenüber liegt der Erfindung die Aufgabe zugrunde, ein verbessertes Verfahren zum Schutz einer Chipkarte gegen unberechtigte Benutzung zu schaffen. Der Erfindung liegt ferner die Aufgabe zugrunde, eine verbesserte Chipkarte und ein verbessertes Chipkarten-Terminal zu schaffen.

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Verfahren zum Schutz einer Chipkarte gegen unberechtigte Benutzung geschaffen. Das Verfahren involviert neben der Chipkarte selbst ein Chipkarten-Terminal.

Unter "Chipkarten-Terminal" wird hier jedes Gerät verstanden, welches zur Kommunikation mit einer Chipkarte ausgebildet ist, um beispielsweise Chipkarten-Kommandos an die Chipkarte zu richten und entsprechende Antworten von der Chipkarte zu empfangen. Die Kommunikation zwischen Chipkarte und Chipkarten-Terminal kann dabei kontaktbehaftet, drahtlos, beispielsweise über ein RFID-Verfahren, oder wahlweise kontaktbehaftet oder drahtlos erfolgen, insbesondere über eine so genannte Dual-Mode-Schnittstelle. Bei dem Chipkarten-Terminal kann es sich um ein so genanntes Klasse 1, 2 oder 3 Chipkarten-Lesegerät mit oder ohne eigener Tastatur oder einen Computer handeln, an den ein Chipkarten-Lesegerät angeschlossen ist. Bei dem Chipkarten-Terminal kann es sich auch um ein für einen bestimmten Zweck vorgesehenes Terminal handeln, wie zum Beispiel einen Bankterminal zur Abwicklung von Bankgeschäften, einen Bezahlterminal, beispielsweise zum Kauf elektronischer Tickets, oder einen Zugangsterminal zur Freigabe des Zugangs zu einem geschützten Bereich.

Unter dem Terminus "Schutz einer Chipkarte" wird hier der Schutz der Chipkarte insgesamt oder der Schutz von einer oder mehreren Chipkartenfunktionen der Chipkarte verstanden. Beispielsweise wird erfindungsgemäß eine besonders schützenswerte Chipkartenfunktion der Chipkarte geschützt, wie zum Beispiel eine Signaturfunktion zur Generierung einer elektronischen Signatur, eine Bezahlfunktion, eine Authentisierungsfunktion oder dergleichen.

Nach einer Ausführungsform des erfindungsgemäßen Verfahrens erhält der autorisierte Benutzer von der die Chipkarte ausgebenden Stelle eine geheime Kennung, die im Allgemeinen als PIN bezeichnet wird. Zur Benutzung der Chipkarte muss zunächst eine Kennung in den Chipkarten-Terminal eingegeben werden, die im Weiteren als PIN' bezeichnet wird. Nur wenn die PIN' identisch mit der PIN ist, soll eine Nutzung der Chipkarte bzw. der geschützten Chipkartenfunktion möglich sein.

Hierzu erzeugt der Chipkarten-Terminal ein Chiffrat aus zumindest einem ersten Kommunikationsparameter mit Hilfe eines ersten symmetrischen Schlüssels. Bei dem ersten symmetrischen Schlüssel kann es sich um die PIN' selbst handeln oder um einen von der PIN' abgeleiteten symmetrischen Schlüssel. Beispielsweise dient die PIN' als so genannter Seed Value zur Generierung des ersten symmetrischen Schlüssels durch das Chipkarten-Terminal.

Der zumindest eine Kommunikationsparameter ist so beschaffen, dass durch ihn ein geschützter ersten Kommunikationskanal zwischen dem Chipkarten-Terminal und der Chipkarte definierbar ist. Um diesen geschützten ersten Kommunikationskanal zwischen der Chipkarte und dem Chipkarten-Terminal aufbauen zu können, wird zunächst das mit Hilfe des ersten symmetrischen Schlüssels gewonnene Chiffrat des ersten Kommunikationsparameters über einen vordefinierten Kommunikationskanal von dem Chipkarten-Terminal an die Chipkarte übertragen. Dieser vordefinierte Kommunikationskanal ist also standardmäßig zum Aufbau einer initialen Kommunikation zwischen dem Chipkarten-Terminal und der Chipkarte definiert.

Nach der Übertragung des Chiffrats über diesen vordefinierten Kommunikationskanal von dem Chipkarten-Terminal an die Chipkarte wird seitens der Chipkarte der Versuch einer Entschlüsselung dieses Chiffrats mit Hilfe eines zweiten symmetrischen Schlüssels unternommen. Diese Entschlüsselung gelingt nur dann, wenn der zweite symmetrische Schlüssel gleich dem ersten Schlüssel ist, d.h. wenn die Voraussetzung PIN' = PIN erfüllt ist.

Der Aufbau einer Kommunikationsverbindung über den geschützten ersten Kommunikationskanal ist also nur dann möglich, wenn die Bedingung PIN' = PIN erfüllt ist, da die Chipkarte nur in diesem Fall Kenntnis von dem ersten Kommunikationsparameter erlangt, durch den der geschützte erste Kommunikationskanal festlegbar ist.

Wenn die Bedingung PIN' = PIN dagegen nicht erfüllt ist, so stimmt der aus der PIN' abgeleitete erste symmetrische Schlüssel nicht mit dem zweiten symmetrischen Schlüssel der Chipkarte überein. Dies hat zur Folge, dass die Entschlüsselung des von dem Chipkarten-Terminal empfangenen Chiffrats durch die Chipkarte mit Hilfe des zweiten symmetrischen Schlüssels nicht den ersten Kommunikationsparameter hervorbringt, sondern beispielsweise einen zweiten Kommunikationsparameter, der von dem ersten Kommunikationsparameter abweicht.

Durch den zweiten Kommunikationsparameter kann ein zweiter Kommunikationskanal definiert sein, der von dem ersten Kommunikationskanal abweichend ist. Wenn die Chipkarte auf dem ersten Kommunikationskanal ein Signal empfängt, so wird dieses jedoch ignoriert, da die Chipkarte ein Signal auf dem zweiten Kommunikationskanal erwartet. Im Ergebnis kommt also keine Kommunikation zwischen dem Chipkarten-Terminal und der Chipkarte zustande, wenn die Bedingung PIN' = PIN nicht erfüllt ist.

Nach einer Ausführungsform der Erfindung kann es sich bei dem Kommunikationsparameter um einen öffentlichen Schlüssel eines asymmetrischen Schlüsselpaars des Chipkarten-Terminals handeln. Für die Festlegung eines symmetrischen Schlüssels für die Kommunikation zwischen dem Chipkarten-Terminal und der Chipkarte, beispielsweise nach dem Diffie-Hellman-Verfahren, wird der öffentliche Schlüssel des Chipkarten-Terminals mit dem aus der ersten Kennung gewonnenen ersten symmetrischen Schlüssel verschlüsselt und über den vordefinierten Kommunikationskanal an die Chipkarte gesendet.

Nur wenn die Bedingung PIN' = PIN erfüllt ist, erhält die Chipkarte den korrekten öffentlichen Schlüssel des Chipkarten-Terminals. Das Chipkarten-Terminal generiert aus dem öffentlichen Schlüssel der Chipkarte, der beispielsweise von einem Schlüssel-Server abgefragt wird, nach dem Diffie-Hellman-Verfahren den dritten symmetrischen Schlüssel, wohingegen die Chipkarte aus deren privaten Schlüssel und dem mit Hilfe des zweiten symmetrischen Schlüssels entschlüsselten Chiffrat einen vierten symmetrischen Schlüssel ebenfalls nach dem Diffie-Hellman-Verfahren generiert, wobei der vierte symmetrische Schlüssel nur dann gleich dem dritten symmetrischen Schlüssel ist, wenn die Bedingung PIN' = PIN erfüllt ist.

Der dritte und der identische vierte symmetrische Schlüssel dienen zur Verschlüsselung von Signalen, insbesondere Chipkarten-Kommandos und Antworten auf solche Chipkarten-Kommandos, die zwischen dem Chipkarten-Terminal und der Chipkarte über den ersten Kommunikationskanal ausgetauscht werden. Dieser erste Kommunikationskanal ist zumindest zusätzlich über den dritten symmetrischen Schlüssel definiert, mit Hilfe dessen die Kommunikation über den ersten Kommunikationskanal mit einem symmetrischen Verschlüsselungsverfahren verschlüsselt wird.

Nach einer Ausführungsform der Erfindung wird ein Verfahren der diskreten logarithmischen Kryptographie (DLC) für die Generierung eines dritten Schlüssels durch das Chipkarten-Terminal und eines vierten symmetrischen Schlüssels durch die Chipkarte verwendet, wobei der vierte symmetrische Schlüssel nur dann gleich dem dritten symmetrischen Schlüssel ist, wenn die Bedingung PIN' = PIN erfüllt ist.

Für die Festlegung des dritten symmetrischen Schlüssels kommen im Prinzip beliebige Verfahren der diskreten logarithmischen Kryptographie zur Anwendung, wie sie beispielsweise
in der Norm National Institute of Standards and Technology (NIST), NIST Special Publication 800-56A, März, 2007 sowie in Standards for Efficient Cryptography, SEC1: Elliptic Curve Cryptography, Certicom Research, September 20, 2000, Version 1.0, beschrieben sind. Solche Verfahren erfordern die Erzeugung von so genannten Domainparametern zum Zweck der Generierung der identischen dritten und vierten symmetrischen Schlüssel durch das Chipkarten-Terminal bzw. die Chipkarte.

Nach einer Ausführungsform der Erfindung wird als DLC ein Verfahren der elliptischen Kurvenkryptographie (ECC) eingesetzt, insbesondere Elliptic Curve Diffie-Hellman (ECDH).

Nach einer Ausführungsform der Erfindung wird die erste Kennung, d.h. die PIN', die in den Chipkarten-Terminal eingegeben wird, wird als so genannter Seed Value für die Ableitung des ersten symmetrischen Schlüssels verwendet. Dadurch wird ein Schlüssel einer größeren Länge erzeugt, als die bei Verwendung der ersten Kennung unmittelbar als Schlüssel der Fall wäre.

Nach einer Ausführungsform der Erfindung wird auf der Chipkarte eine zweite Kennung, d.h. die PIN, gespeichert, aus der der zweite symmetrische Schlüssel für die Entschlüsselung des von dem Chipkarten-Terminal initial empfangenen Chiffrats ableitbar ist. Zur Ableitung des zweiten symmetrischen Schlüssels aus der zweiten Kennung kann die zweite Kennung als Seed Value verwendet werden.

Nach einer Ausführungsform der Erfindung ist nicht die PIN selbst in der Chipkarte gespeichert, sondern nur der zweite symmetrische Schlüssel. Der zweite symmetrische Schlüssel ist vorzugsweise in einem nichtflüchtigen geschützten Speicherbereich der Chipkarte gespeichert. Im Unterschied zum Stand der Technik ist also die Speicherung der PIN als Referenzwert in der Chipkarte nicht erforderlich.

Nach einer Ausführungsform der Erfindung hat die Chipkarte einen Fehlbedienungs-Zähler. Wenn aufgrund einer Fehleingabe der PIN' die ersten und zweiten Kommunikationskanäle nicht übereinstimmen, so inkrementiert bzw. dekrementiert die Chipkarte den Fehlbedienungs-Zähler mit jeder Nachricht, die die Chipkarte auf einem anderen als dem zweiten oder dem vordefinierten Kommunikationskanal empfängt. Solche Nachrichten, die die Chipkarte auf einem anderen als den zweiten oder dem vordefinierten Kommunikationskanal empfängt, werden von der Chipkarte ansonsten ignoriert. Wenn die Anzahl der Fehlbedienungen einen vorgegebenen Schwellwert überschreitet, so wird die Chipkarte insgesamt oder eine bestimmte Chipkartenfunktion, reversibel oder irreversibel gesperrt.

Nach einer Ausführungsform der Erfindung hat die Chipkarte eine Erstbenutzerfunktion. Die unbenutzte Chipkarte befindet sich in ihrem Erstbenutzungszustand, in dem ein bestimmter Kommunikationsparameter für eine erste Wahl des ersten Kommunikationskanals festgelegt ist. Die Chipkarte geht aus ihrem Erstbenutzungszustand in einen Benutztzustand über, wenn sie zum ersten Mal ein Chipkartenkommando auf diesem ersten Kommunikationskanal empfängt. Für die weitere Verwendung der Chipkarte muss dann seitens des Chipkartenterminals ein anderer Kommunikationsparameter gewählt werden.

In einem weiteren Aspekt betrifft die Erfindung eine Chipkarte mit Chipkarte mit einer Schnittstelle zur Kommunikation über einen vordefinierten Kommunikationskanal und mehreren weiteren Kommunikationskanälen mit einem Chipkarten-Terminal, Mitteln zur Entschlüsselung eines auf dem vordefinierten Kanal empfangenen Chiffrats, welches mit Hilfe eines ersten symmetrischen Schlüssel verschlüsselt ist, mit Hilfe eines zweiten symmetrischen Schlüssels, wobei die Entschlüsselung zumindest einen Kommunikationsparameter ergibt, wenn eine zuvor in den Chipkarten-Terminal eingegebene erste Kennung zutreffend ist, wobei durch den Kommunikationsparameter einer der weiteren Kommunikationskanäle für die geschützte Kommunikation zwischen der Chipkarte und dem Chipkarten-Terminal eindeutig festgelegt ist.

In einem weiteren Aspekt betrifft die Erfindung ein Chipkarten-Terminal mit Mitteln zur Eingabe einer ersten Kennung, Mitteln zur Erzeugung eines Chiffrats aus zumindest einem ersten Kommunikationsparameter mit Hilfe eines aus der ersten Kennung abgeleiteten ersten symmetrischen Schlüssels, wobei mit Hilfe des Kommunikationsparameters ein geschützter erster Kommunikationskanal zwischen dem Chipkarten-Terminal und der Chipkarte definierbar ist, und Mitteln zum Senden des Chiffrats über einen vordefinierten Kommunikationskanal an die Chipkarte.

In einem weiteren Aspekt betrifft die Erfindung eine Chipkarte, mit einem geschützten nicht-flüchtigen Speicherbereich zur Speicherung des zweiten Schlüssels.

In einem weiteren Aspekt betrifft die Erfindung ein Chipkarten-Terminal.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Chipkarte und eines Chipkarten-Terminals,
- Figur 2: ein Flussdiagramm einer Ausführungsform eines erfindungsgemäßen Verfahrens,

Das Chipkarten-Terminal 100 hat eine Nutzerschnittstelle 114, wie zum Beispiel eine Tastatur oder eine graphische Benutzeroberfläche, über die eine erste Kennung 116 eingegeben werden kann. Diese erste Kennung wird im Weiteren ohne Beschränkung der Allgemeinheit als PIN' bezeichnet.

Das Chipkarten-Terminal 100 hat zumindest einen Prozessor 118 zur Ausführung eines Anwendungsprogramms 120. Das Anwendungsprogramm 120 kann die Generierung eines Chipkarten-Kommandos 122 veranlassen, um eine bestimmte Chipkartenfunktion 124 der Chipkarte 104 aufzurufen. Beispielsweise benötigt das Anwendungsprogramm 120 die Chipkartenfunktion 124 für eine Authentizitätsprüfung, für die Generierung einer digitalen Signatur, für die Überprüfung einer Berechtigung, insbesondere einer Zugangsberechtigung, die Vornahme einer finanziellen Transaktion oder dergleichen.

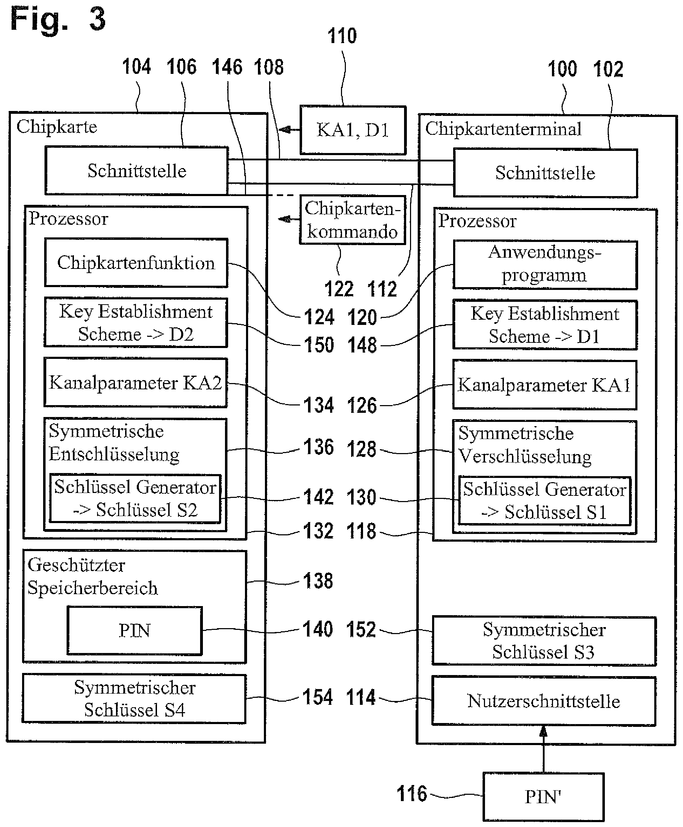

- Figur 3: ein Blockdiagramm einer weiteren Ausführungsform einer erfindungsgemäßen Chipkarte und eines Chipkarten-Terminals,

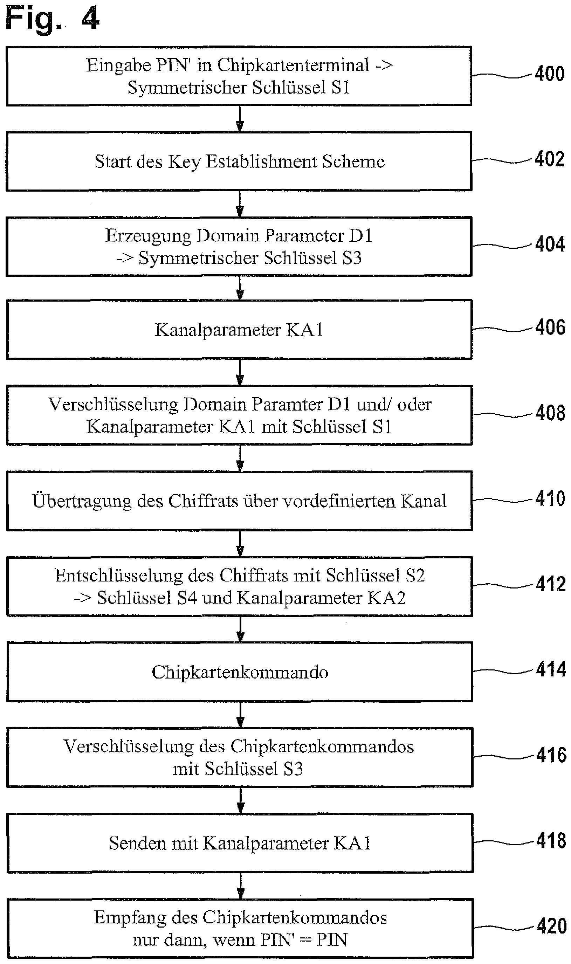

- Figur 4: ein Flussdiagramm einer weiteren Ausführungsform eines erfindungsgemäßen Verfahrens.

In den nachfolgenden Figuren sind einander entsprechende Elemente der verschiedenen Ausführungsformen mit gleichen Bezugszeichen gekennzeichnet.

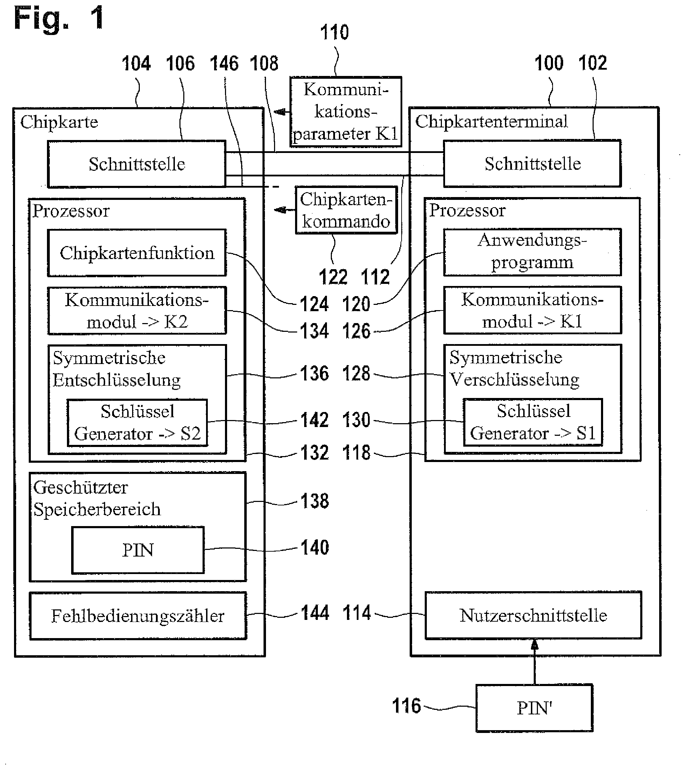

Die Figur 1 zeigt ein Blockdiagramm eines Chipkarten-Terminals 100. Der Chipkarten-Terminal 100 hat eine Schnittstelle 102 zur Kommunikation mit einer Chipkarte 104, die eine entsprechende Schnittstelle 106 aufweist. Vorzugsweise sind die Schnittstellen 102 und 106 für eine drahtlose Kommunikation, beispielsweise über Funk, insbesondere nach einem RFID-Verfahren ausgebildet.

Die Schnittstellen 102 und 106 sind beispielsweise so beschaffen, dass zwischen den Schnittstellen 102, 106 verschiedene Kommunikationskanäle aufgebaut werden können, wobei sich diese Kommunikationskanäle auf einer physikalischen und/oder logischen Ebene voneinander unterscheiden. Beispielsweise können Kommunikationskanäle unterschiedlicher Übertragungsfrequenzen aufgebaut werden. Es können auch Kommunikationskanäle auf der Basis verschiedener Frequenz-Hopping-Schemata aufgebaut werden. Unter "Frequenz-Hopping" werden hier Frequenzsprung-Verfahren verstanden, wonach die für die Datenübertragung verwendeten Frequenzen nach einem definierten Schema fortlaufend geändert werden.

Die Schnittstellen 102, 106 können auch so ausgebildet sein, dass unterschiedliche Kommunikationskanäle mit Hilfe unterschiedlicher Codierungsverfahren und/oder Modulationsverfahren, wie zum Beispiel Frequenzmodulation, Amplitudenmodulation, Phasenmodulation, Pulsweitenmodulation oder anderer Modulationsverfahren aufgebaut werden.

Die verschiedenen Kommunikationskanäle, die zwischen den Schnittstellen 102 und 106 aufgebaut werden können, werden im Weiteren als die "Menge der Kommunikationskanäle" bezeichnet.

Einer der Kommunikationskanäle 108 aus der Menge der Kommunikationskanäle ist für die initiale Kommunikation zwischen dem Chipkarten-Terminal 100 und der Chipkarte 104 vordefiniert. Beispielsweise ist der Kommunikationskanal hinsichtlich seiner Übertragungsfrequenz sowie der zu verwendenden Modulations- und Codierungsverfahren vordefiniert.

Der vordefinierte Kommunikationskanal dient zur Übertragung von einem Chiffrat 110 des zumindest einen Kommunikationsparameters K1 von dem Chipkarten-Terminal 100 zu der Chipkarte 104, um der Chipkarte 104 mitzuteilen, welcher der Kommunikationskanäle 112 der Menge von Kommunikationskanälen für die nachfolgende Kommunikation mit dem Chipkarten-Terminal 100 verwendet werden soll.

Der Kommunikationsparameter K1 beinhaltet also eine Angabe, die diesen Kommunikationskanal 112 eindeutig spezifiziert. Diese Angabe kann in Form eines Codeworts erfolgen. In der Chipkarte 104 kann in einem nichtflüchtigen Speicher eine so genannte Lookup-Tabelle gespeichert sein, in der den möglichen Codeworten jeweils eine Spezifizierung einer der Kommunikationskanäle der Menge der Kommunikationskanäle zugeordnet ist.

Für die Auswahl eines Kommunikationskanals aus der Menge von Kommunikationskanälen können sämtliche mögliche, zwischen den Schnittstellen 102, 106 aufbaubare Kommunikationskanäle zur Verfügung stehen oder eine Auswahl davon, wobei dann jeder der Kommunikationskanäle der Menge von Kommunikationskanälen, der tatsächlich für die Kommunikation zwischen der Schnittstelle 102, 106 verwendet werden kann, einem eindeutigen Codewort zugeordnet ist, welches als Kommunikationsparameter 110 von dem Chipkarten-Terminal 100 an die Chipkarte 104 übertragen werden kann.

Der Prozessor 118 dient ferner zur Ausführung der Programminstruktionen eines Kommunikationsmoduls 126, welches zur Auswahl des Kommunikationskanals 112 aus der Menge der Kommunikationskanäle und damit zur Wahl des Kommunikationsparameters 110 dient. Die Auswahl des Kommunikationsparameters 110 kann nach einem vorgegebenen Schema oder zufällig, insbesondere pseudo-zufällig, erfolgen. Beispielsweise ist in dem Kommunikationsmodul 126 eine Liste von verschiedenen Kommunikationsparametern 110 abgelegt, die zyklisch abgearbeitet wird.

Der Prozessor 118 dient ferner der Ausführung von Programminstruktionen 128 für eine symmetrische Verschlüsselung der Kommunikationsparameter 110. Die Verschlüsselung erfolgt mit Hilfe der PIN'. Hierzu können die Programminstruktionen 128 einen Schlüsselgenerator 130 beinhalten.

Der Schlüsselgenerator 130 kann so ausgebildet sein, dass er aus der PIN' als Seed Value einen ersten symmetrischen Schlüssel generiert, der im Weiteren als S1 bezeichnet wird. Der erste symmetrische Schlüssel S1 dient zur symmetrischen Verschlüsselung des von dem Kommunikationsmodul 126 selektierten Kommunikationsparameters K1.

Das sich aus der symmetrischen Verschlüsselung mit dem ersten symmetrischen Schlüssel S1 ergebende Chiffrat des Kommunikationsparameters K1 wird über den vordefinierten Kommunikationskanal 108 von der Schnittstelle 102 zu der Schnittstelle 106 übertragen.

Die Chipkarte 104 hat einen Prozessor 132, der zur Ausführung der Programminstruktionen eines Kommunikationsmoduls 134 dient. Das Kommunikationsmodul 134 ist zur Verarbeitung des von dem Chipkarten-Terminal 100 gegebenenfalls empfangenen Kommunikationsparameters K1 ausgebildet. Das Kommunikationsmodul 134 kann beispielsweise mit dem Kommunikationsparameter K1 als Schlüssel auf eine Zuordnungstabelle, insbesondere eine lookup Tabelle, zugreifen, um die Parameter des von dem Chipkarten-Terminal 100 selektierten Kommunikationskanals 112 abzufragen, wie zum Beispiel dessen Übertragungsfrequenz und/oder die zu verwendenden Codierungs- und Modulationsverfahren.

Der Prozessor 132 dient ferner zur Ausführung von Programminstruktionen 136 für die symmetrische Entschlüsselung des Chiffrats 110, welches die Chipkarte 104 von dem Chipkarten-Terminal 100 empfangen hat. Beispielsweise hat die Chipkarte 104 einen geschützten Speicherbereich 138, in dem eine zweite Kennung 140 gespeichert ist. Die zweite Kennung wird im Weiteren ohne Beschränkung der Allgemeinheit als PIN bezeichnet. Die PIN wird dem autorisierten Benutzer der Chipkarte mit der Aushändigung der Chipkarte 104 gesondert mitgeteilt, beispielsweise in Form eines so genannten PIN-Briefes.

Die Programminstruktionen 136 können einen Schlüsselgenerator 142 beinhalten, der die PIN als so genannten Seed Value verwendet, um daraus einen zweiten symmetrischen Schlüssel abzuleiten. Dieser zweite symmetrische Schlüssel wird im Weiteren als S2 bezeichnet.

Alternativ kann der zweite symmetrische Schlüssel S2 in dem geschützten Speicherbereich 138 der Chipkarte 104 anstelle der PIN 140 gespeichert sein. Der Schlüsselgenerator 142 sowie eine Speicherung der PIN 140 in der Chipkarte 104 erübrigen sich dann. Im Unterschied zum Stand der Technik muss also auf der Chipkarte 104 nicht unbedingt die PIN 140 als Referenzwert für die Prüfung der Richtigkeit der PIN' 116 gespeichert sein.

Die Chipkarte 104 kann ferner einen Fehlbedienungs-Zähler 144 aufweisen. Der Fehlbedienungs-Zähler 144 ist so ausgebildet, dass jede Fehlbedienung der Chipkarte 104 gezählt wird. Die Anzahl der Fehlbedienungen wird mit einem vorgegebenen Schwellwert verglichen. Wenn dieser Schwellwert erreicht wird, wird zumindest die Chipkartenfunktion 124, welcher der Fehlbedienungs-Zähler 144 zugeordnet ist, reversibel oder irreversibel gesperrt.

Die Chipkarte 104 kann ferner eine Erstbenutzungsfunktion aufweisen. Beispielsweise ist der Erstbenutzungsstatus der Chipkarte 104 durch einen bestimmten Kommunikationsparameter definiert, der einen der Kommunikationskanäle der Menge spezifiziert, der für die erste Benutzung der Chipkarte verwendet werden muss.

Zur Verwendung der Chipkarte 104 wird wie folgt vorgegangen: Ein Benutzer gibt die PIN' 116 über die Nutzerschnittstelle 114 in den Chipkarten-Terminal 100 ein. Dies kann auf eine entsprechende Anforderung des Anwendungsprogramms 120 hin geschehen. Das Kommunikationsmodul 126 wählt daraufhin einen ersten der möglichen Kommunikationsparameter beispielsweise aus der vorgegebenen Liste der Kommunikationsparameter aus, also den Kommunikationsparameter K1.

Der Schlüsselgenerator 130 generiert aus der PIN' den ersten symmetrischen Schlüssel S1. Der Kommunikationsparameter K1 wird daraufhin durch Ausführung der Programminstruktionen 128 mit Hilfe des ersten symmetrischen Schlüssels S1 verschlüsselt. Das daraus resultierende Chiffrat 110 des Kommunikationsparameters K1 wird dann über den vordefinierten Kommunikationskanal 108 von der Schnittstelle 102 an die Schnittstelle 106 der Chipkarte 104 gesendet.

Die Chipkarte 104 leitet erforderlichenfalls den zweiten symmetrischen Schlüssel S2 aus der PIN ab oder greift direkt über den zweiten symmetrischen Schlüssel S2 in den geschützten Speicherbereich 138 zu. Mit

Hilfe des zweiten symmetrischen Schlüssels S2 wird der Versuch einer Entschlüsselung des von dem Chipkarten-Terminal 100 empfangenen Chiffrats 110 des Kommunikationsparameters K1 durch Ausführung der Programminstruktionen 136 von der Chipkarte 104 unternommen.

Das Ergebnis dieses Entschlüsselungsversuchs ist ein zweiter Kommunikationsparameter, der im Weiteren als K2 bezeichnet wird, und der dem Kommunikationsmodul 134 übergeben wird. Dieser Kommunikationsparameter K2 ist nur dann identisch mit dem Kommunikationsparameter K1, wenn die Bedingung PIN' = PIN erfüllt ist, da nur dann der erste symmetrische Schlüssel S1, der für die symmetrische Verschlüsselung verwendet worden ist, gleich dem zweiten symmetrischen Schlüssel S2 sein kann, welcher für die symmetrische Entschlüsselung des Chiffrats des Kommunikationsparameters K1 verwendet wurde.

Durch den Kommunikationsparameter K2 kann ein zweiter Kommunikationskanal 146 definiert sein, indem nämlich das Kommunikationsmodul 134 mit dem Kommunikationsparameter K2 auf seine Zuordnungstabelle zugreift. Dieser zweite Kommunikationskanal 146 ist wiederum nur dann identisch mit dem ersten Kommunikationskanal 112, wenn die Bedingung PIN' = PIN erfüllt ist.

Nach der Übertragung des Chiffrats des Kommunikationsparameters K1 über den vordefinierten Kommunikationskanal 108 generiert das Chipkarten-Terminal 100 das Chipkarten-Kommando 122, welches über den ersten Kommunikationskanal 112 von der Schnittstelle 102 an die Schnittstelle 106 gesendet wird. Die Chipkarte 104 bzw. deren Kommunikationsmodul 134 sind für den Empfang auf den zweiten Kommunikationskanal 146 aufgrund des Kommunikationsparameters K2 eingestellt.

Wenn der zweite Kommunikationskanal 146 mit dem ersten Kommunikationskanal 112 übereinstimmt, so wird das Chipkarten-Kommando 122 von der Chipkarte 104 verarbeitet und die Chipkartenfunktion 124 wird aufgerufen. Als Ergebnis generiert die Chipkarte 104 eine Antwort auf das Chipkarten-Kommando 122 und überträgt diese Antwort über den ersten Kommunikationskanal 112 zurück an die Chipkarte 100.

Wenn hingegen der zweite Kommunikationskanal 146 nicht identisch mit dem ersten Kommunikationskanal 112 ist, so ignoriert die Chipkarte 104 das auf dem ersten Kommunikationskanal 112 empfangene Chipkarten-Kommando und inkrementiert den Fehlbedienungs-Zähler 144.

Beispielsweise ist der Kommunikationskanal 108 durch eine Übertragungsfrequenz von 9 GHz definiert, der Kommunikationskanal 112 durch eine Übertragungsfrequenz von 10 GHz und der Kommunikationskanal 146 durch eine Übertragungsfrequenz von 11 GHz, wobei die Übertragungsfrequenzen der Kommunikationskanäle 112 und 146 voneinander abweichen, da die in den Chipkartenterminal 100 eingegebene PIN' nicht gleich der PIN ist. Wenn die Chipkarte 104 in diesem Fall ein Signal auf der Frequenz 10 GHz von dem Chipkartenterminal 100 empfängt, obwohl sie einen Empfang auf der Frequenz 11 GHz erwartet hat, wird dieses Signal ignoriert und der Fehlbedienungszähler wird inkrementiert. Dadurch ist eine implizite Überprüfung der PIN' gegeben, ohne dass die PIN' unmittelbar mit der PIN verglichen werden müsste, und ohne dass die PIN in der Chipkarte gespeichert sein muss.

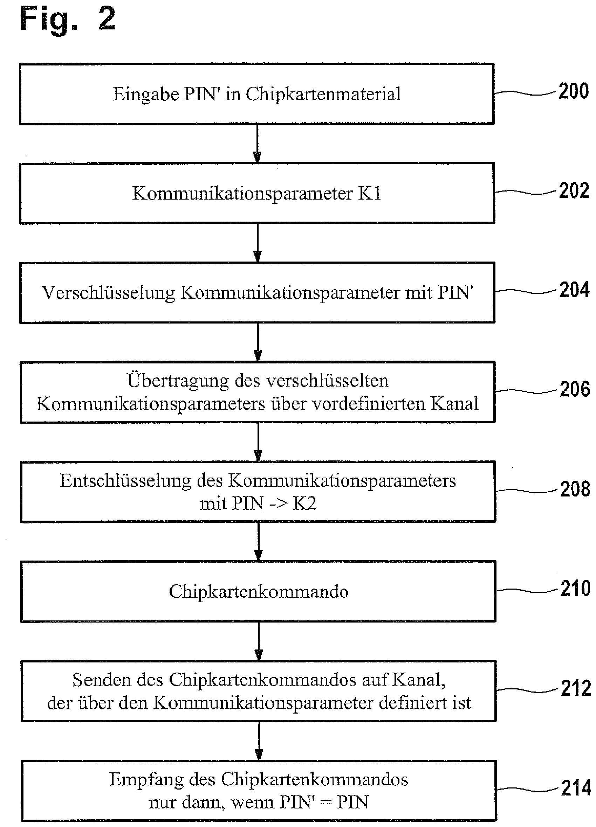

Die Figur 2 zeigt ein entsprechendes Flussdiagramm. In dem Schritt 200 wird die PIN' in dem Chipkarten-Terminal eingegeben. Daraufhin wird in dem Schritt 202 durch den Chipkarten-Terminal 100 der Kommunikationsparameter K1 zur Auswahl eines der Kommunikationskanäle aus der Menge der Kommunikationskanäle festgelegt. In dem Schritt 204 wird der Kommunikationsparameter K1 mit Hilfe der PIN' symmetrisch verschlüsselt. Dies kann so erfolgen, dass aus der PIN' mit Hilfe eines Schlüsselgenerators der erste symmetrische Schlüssel S1 abgeleitet wird, der dann zur Verschlüsselung des Kommunikationsparameters K1 dient.

In dem Schritt 206 wird das mit Hilfe des Schlüssels S1 erzeugte Chiffrat des Kommunikationsparameters K1 über einen vordefinierten Kommunikationskanal von dem Chipkarten-Terminal an die Chipkarte übertragen.

Die Chipkarte 104 unternimmt in dem Schritt 208 den Versuch einer Entschlüsselung des Kommunikationsparameters K1 auf der Basis der PIN. Die zutreffende PIN kann in einem geschützten Speicherbereich der Chipkarte gespeichert sein, und wird zur Ableitung eines zweiten symmetrischen Schlüssels S2 verwendet. Alternativ kann auch unmittelbar der zweite symmetrische Schlüssel S2 in dem geschützten Speicherbereich der Chipkarte gespeichert sein.

Die Entschlüsselung des Chiffrats des Kommunikationsparameters K1 mit dem zweiten symmetrischen Schlüssel S2 hat einen Kommunikationsparameter K2 zum Ergebnis. Durch diesen Kommunikationsparameter K2 kann ein zweiter Kommunikationskanal der Menge definiert sein. Nur wenn die PIN' zutreffend ist, d.h. wenn die Bedingung PIN' = PIN erfüllt ist, sind die durch die Kommunikationsparameter K1 und K2 spezifizierten Kommunikationskanäle identisch.

In dem Schritt 210 generiert der Chipkarten-Terminal ein Chipkarten-Kommando und sendet dies über den ersten, durch den Kommunikationsparameter K1 spezifizierten Kommunikationskanal an die Chipkarte (Schritt 212). In dem Schritt 214 kann die Chipkarte das Chipkarten-Kommando nur dann empfangen, wenn der zweite Kommunikationskanal, auf den die Chipkarte zum Empfang eingerichtet ist, identisch mit dem ersten Kommunikationskanal ist, d.h. wenn die Bedingung PIN' = PIN erfüllt ist. Im gegenteiligen Fall ignoriert die Chipkarte das auf dem ersten Kommunikationskanal empfangene Chiffrat und inkrementiert deren Fehlbedienungs-Zähler.

Bei dem Kommunikationsparameter K1 kann es sich in einer Ausführungsform der Erfindung um einen öffentlichen Schlüssel des Chipkarten-Terminals handeln. Das Chiffrat dieses öffentlichen Schlüssels, das mit Hilfe des ersten symmetrischen Schlüssels S1 durch symmetrische Verschlüsselung generiert worden ist, wird von dem Chipkarten-Terminal
an die Chipkarte übertragen. Die Chipkarte empfängt nur dann den korrekten öffentlichen Schlüssel des Chipkarten-Terminals, wenn wiederum die Bedingung PIN' = PIN erfüllt ist, da nur dann die Entschlüsselung des Chiffrats mit Hilfe des zweiten symmetrischen Schlüssels S2 gelingt (vergleiche die Ausführungsform der Figur 1). Den öffentlichen Schlüssel der Chipkarte kann das Chipkarten-Terminal beispielsweise von einem externen Schlüsselserver über ein Netzwerk, insbesondere das Internet, abfragen.

Aus dem privaten Schlüssel des Chipkarten-Terminals und dem öffentlichen Schlüssel der Chipkarte kann das Chipkarten-Terminal nach dem Diffie-Hellman-Verfahren einen dritten symmetrischen Schlüssel S3 ableiten. Dementsprechend kann die Chipkarte aus dem öffentlichen Schlüssel des Chipkarten-Terminals und seinem privaten Schlüssel ebenfalls nach dem Diffie-Hellman-Verfahren einen vierten symmetrischen Schlüssel S4 ableiten. Der dritte und vierte symmetrische Schlüssel S3 und S4 sind identisch, wenn die Bedingung PIN' = PIN erfüllt ist.

Der erste Kommunikationskanal (vergleiche Kommunikationskanal 112 der Figur 1) ist in dieser Ausführungsform zumindest ergänzend über den dritten und vierten symmetrischen Schlüssel S3 = S4 definiert. Das von dem Chipkarten-Terminal an die Chipkarte gesendete Chipkarten-Kommando wird nämlich mit dem dritten symmetrischen Schlüssel S3 verschlüsselt, und kann nur dann von der Chipkarte entschlüsselt, d.h. empfangen werden, wenn sich das Chipkarten-Kommando mit Hilfe des vierten Schlüssels S4 entschlüsseln lässt. Andernfalls wird das Chipkarten-Kommando ignoriert und der Fehlbedienungs-Zähler wird inkrementiert.

Die Figur 3 zeigt eine Ausführungsform einer erfindungsgemäßen Chipkarte und eines erfindungsgemäßen Chipkarten-Terminals, wobei ein Verfahren zur diskreten logarithmischen Kryptographie für die Generierung des dritten und vierten symmetrischen Schlüssels S3 bzw. S4 zur Anwendung kommt. Ergänzend zu der Ausführungsform gemäß Figur 1 dient der Prozessor 118 zur Ausführung von Programminstruktionen 148, durch welche ein so genanntes Key Establishment Scheme für die Generierung des dritten symmetrischen Schlüssels S3 gegeben ist.

Das Key Establishment Scheme arbeitet nach einem Verfahren der diskreten logarithmischen Kryptographie (DLC), insbesondere der elliptischen Kurvenkryptographie (EEC), vorzugsweise nach einem elliptischen Kurven-Diffie-Hellman-Verfahren (ECDH). Zur Generierung des dritten symmetrischen Schlüssels S3 erzeugen die Programminstruktionen 148 zunächst erste Domainparameter, die im Weiteren als D1 bezeichnet werden.

Zusätzlich kann das Kommunikationsmodul 126 einen ersten Kanalparameter KA1 erzeugen oder aus einer vorgegebenen Liste auslesen, welcher zum Beispiel die physikalischen Eigenschaften des ersten Kommunikationskanals spezifiziert. Der erste Kanalparameter KA1 entspricht dem Kanalparameter K1 in der Ausführungsform der Figur 1.

Die Domainparameter D1 und der oder die Kanalparameter KA1 werden mit Hilfe des ersten symmetrischen Schlüssels S1 durch die Programminstruktionen 128 verschlüsselt. Das aus KA1, D1 mit Hilfe des Schlüssels S1 gewonnene Chiffrat 110 wird über den vordefinierten Kommunikationskanal 108 von der Schnittstelle 102 zu der Schnittstelle 106 übertragen.

Die Chipkarte 104 entschlüsselt das Chiffrat 110 mit Hilfe des zweiten symmetrischen Schlüssels S2. Als Resultat der Entschlüsselung erhält die Chipkarte 104 den zweiten Kanalparameter KA2, der dem Kommunikationsparameter K2 in der Ausführungsform der Figur 1 entspricht. Ferner erhält die Chipkarte die Domainparameter D2. Der Kanalparameter KA2 wird durch das Kommunikationsmodul 134 verarbeitet, um beispielsweise die physikalische Spezifizierung des zweiten Kommunikationskanals 146 festzustellen.

Die Chipkarte 104 hat ergänzend zu der Ausführungsform der Figur 1 Programminstruktionen 150, die in ihrer Funktionalität den Programminstruktionen 148 entsprechen, und durch die chipkartenseitig das Key Establishment Scheme implementiert wird.

Seitens des Chipkarten-Terminal wird durch Ausführung der Programminstruktionen 148 aus den Domainparametern D1 der dritte symmetrische Schlüssel S3 abgeleitet, der in einem Speicher 152 des Chipkarten-Terminals 100 abgelegt wird. Dementsprechend wird durch Ausführung der Programminstruktionen 150 seitens der Chipkarte 104 aus den Domainparametern D2 ein vierter symmetrischer Schlüssel S4 abgeleitet, der in einen Speicher 154 der Chipkarte 104 abgelegt wird.

Das Chipkarten-Kommando 122 wird vor seiner Versendung durch den Chipkarten-Terminal mit dem dritten symmetrischen Schlüssel S3 verschlüsselt und dann über den durch die Kanalparameter KA1 spezifizierten ersten Kommunikationskanal 112 übertragen. Ein Empfang des Chipkarten-Kommandos 122 durch die Chipkarte 104 ist nur möglich, wenn sowohl KA2 = KA1 und D2 = D1 ist, was wiederum nur dann möglich ist, wenn die Bedingung PIN` = PIN erfüllt ist.

Von besonderem Vorteil bei dieser Ausführungsform ist, dass die Übertragung der Domainparameter D1 über den vordefinierten Kommunikationskanal 108 durch einen Dritten nicht ausgespäht werden kann, da die Übertragung der Domainparameter D1 in einer verschlüsselten Form erfolgt.

Die Figur 4 zeigt ein entsprechendes Flussdiagramm. In dem Schritt 400 wird eine PIN' in das Chipkarten-Terminal durch einen Benutzer eingegeben. Aus der PIN' wird der erste symmetrische Schlüssel S1 abgeleitet.

In dem Schritt 402 wird das Key Establishment Scheme gestartet. Daraufhin wird in dem Schritt 404 ein Satz Domainparameter D1 erzeugt. Mit Hilfe der Domainparameter D1 wird der dritte symmetrische Schlüssel S3 durch das Chipkarten-Terminal generiert. Ferner werden in dem Schritt 406 durch das Chipkarten-Terminal der Kanalparameter KA1 generiert oder aus einer vorgegebenen Liste ausgelesen.

In dem Schritt 408 werden die Domainparameter D1 und/oder die Kanalparameter KA1 mit dem ersten symmetrischen Schlüssel S1 verschlüsselt. Beispielsweise werden die Domainparameter D1 und die Kanalparameter KA1 aneinander gehängt, woraus ein einziger

Kommunikationsparameter resultiert, der dann mit dem ersten symmetrischen Schlüssel S1 verschlüsselt wird. Alternativ werden nur die Domainparameter D1 oder nur die Kanalparameter KA1 oder eine jeweilige Teilmenge der Domain- und/oder Kanalparameter mit dem ersten symmetrischen Schlüssel S1 verschlüsselt. Das aus der Verschlüsselung mit dem ersten symmetrischen Schlüssel S1 resultierende Chiffrat sowie gegebenenfalls verbleibende unverschlüsselten Domain- und/oder Kanalparameter werden in dem Schritt 410 von dem Chipkarten-Terminal an die Chipkarte über den vordefinierten Kanal (vergleiche Kommunikationskanal 108 der Figuren 1 und 3) übertragen.

In dem Schritt 412 versucht die Chipkarte das Chiffrat mit Hilfe des zweiten symmetrischen Schlüssels S2 zu entschlüsseln. Daraus erhält die Chipkarte 104 die Kanalparameter KA2 und die Domainparameter D2. Aus den Domainparametern D2 leitet die Chipkarte 104 den vierten symmetrischen Schlüssel S4 ab.

In dem Schritt 414 generiert das Chipkarten-Terminal 100 ein Chipkarten-Kommando, welches mit dem dritten symmetrischen Schlüssel S3 verschlüsselt wird (Schritt 416), um dieses über den durch die Kanalparameter KA1 definierten ersten Kommunikationskanal zu übertragen (vergleiche Kommunikationskanal 112 in den Ausführungsformen der Figuren 1 und 3). Das Chipkarten-Terminal 100 versendet das Chipkarten-Kommando in dem Schritt 418.

Ein korrekter Empfang dieses Chiffrats durch die Chipkarte ist in dem Schritt 420 nur dann möglich, wenn der zweite Kommunikationskanal 146 mit dem ersten Kommunikationskanal 112 übereinstimmt, d.h. wenn KA2 = KA1 ist, und wenn außerdem eine Entschlüsselung des Chipkarten-Kommandos mit dem vierten symmetrischen Schlüssel S4 möglich ist, d.h. wenn S4 = S3 ist. Die Bedingungen KA2 = KA1 und S4 = S3 können aber nur dann erfüllt sein, wenn die korrekte PIN' durch den Benutzer in das Chipkarten-Terminal eingegeben worden ist, d.h. wenn PIN' = PIN ist.

### Bezugszeichenliste

- 100: Chipkarten-Terminal
- 102: Schnittstelle
- 104: Chipkarte
- 106: Schnittstelle
- 108: vordefinierter Kommunikationskanal
- 110: Kommunikationsparameter
- 112: erster Kommunikationskanal
- 114: Nutzerschnittstelle
- 116: PIN'
- 118: Prozessor
- 120: Anwendungsprogramm
- 122: Chipkarten-Kommando
- 124: Chipkartenfunktion
- 126: Kommunikationsmodul
- 128: Programminstruktionen
- 130: Schlüsselgenerator
- 132: Prozessor
- 134: Kommunikationsmodul
- 136: Programminstruktionen
- 138: gesch ützter Speicherbereich
- 140: PIN
- 142: Schlüsselgenerator
- 144: Fehlbedienungs-Zähler
- 146: zweiter Kommunikationskanal
- 148: Programminstruktionen
- 150: Programminstruktionen
- 152: Speicher
- 154: Speicher

## Patentansprüche

1. Verfahren zum Schutz einer Chipkarte (104) gegen unberechtigte Benutzung mit folgenden Schritten:
- Eingabe einer ersten Kennung (116) in einen Chipkarten-Terminal (100),
- Erzeugung eines Chiffrats aus zumindest einem ersten Kommunikationsparameter (K1; KA1, D1) mit Hilfe eines aus der ersten Kennung abgeleiteten ersten symmetrischen Schlüssels (S1), wobei mit Hilfe des Kommunikationsparameters ein geschützter erster Kommunikationskanal (112) zwischen dem Chipkarten-Terminal und der Chipkarte definierbar ist,
- Übertragung des Chiffrats über einen vordefinierten Kommunikationskanal (108) von dem Chipkarten-Terminal an die Chipkarte,
- Versuch einer Entschlüsselung des Chiffrats mit Hilfe eines zweiten symmetrischen Schlüssels (S2) durch die Chipkarte, wobei das Resultat der Entschlüsselung nur dann der erste Kommunikationsparameter ist, wenn der erste symmetrische Schlüssel dem zweiten symmetrischen Schlüssel gleicht, sodass der geschützte erste Kommunikationskanal nur dann zwischen dem Chipkarten-Terminal und der Chipkarte definierbar ist, wenn die erste Kennung zutreffend ist,
**dadurch gekennzeichnet, dass**
es sich bei dem ersten Kommunikationsparameter um einen öffentlichen Schlüssel des Chipkarten-Terminals handelt, wobei die Chipkarte im Fall, dass die Entschlüsselung des Chiffrats gelingt, aus dem öffentlichen Schlüssel nach dem Diffie-Hellman (DH)-Verfahren einen weiteren symmetrischen Schlüssel (S4) zur Verschlüsselung der Kommunikation zwischen dem Chipkarten-Terminal und der Chipkarte ableitet, wobei durch die Verschlüsselung mit dem weiteren symmetrischen Schlüssel der erste Kommunikationskanal definiert ist.

2. Verfahren nach Anspruch 1, wobei es sich bei dem ersten Kommunikationsparameter um einen ersten Domainparameter (D1) für die Durchführung eines diskreten logarithmischen kryptographischen Verfahrens zur Erzeugung eines dritten symmetrischen Schlüssels (S3) durch das Chipkarten-Terminal und eines vierten symmetrischen Schlüssels (S4) durch die Chipkarte und handelt, wobei die dritten und vierten symmetrischen Schlüssel identisch sind, wenn die erste Kennung zutreffend ist, wobei der dritte und vierte symmetrische Schlüssel zur Verschlüsselung der Kommunikation zwischen dem Chipkarten-Terminal und der Chipkarte über den geschützten ersten Kommunikationskanal vorgesehen sind.

3. Verfahren nach Anspruch 2, wobei es sich bei dem diskreten logarithmischen kryptographischen Verfahren um ein elliptische Kurven kryptographisches Verfahren handelt.

4. Verfahren nach Anspruch 2 oder 3, wobei es sich bei dem diskreten logarithmischen kryptographischen Verfahren um ein elliptisches Kurven Diffie-Hellman-Verfahren handelt.

5. Verfahren nach einem der vorhergehenden Ansprüche, wobei die erste Kennung als Seed Value für die Ableitung des ersten symmetrischen Schlüssels durch das Chipkarten-Terminal verwendet wird.

6. Verfahren nach einem der vorhergehenden Ansprüche, wobei auf der Chipkarte eine zweite Kennung (140) gespeichert ist, aus der der zweite symmetrische Schlüssel ableitbar ist.

7. Verfahren nach einem der vorhergehenden Ansprüche, wobei der zweite symmetrische Schlüssel in einem geschützten nicht-volatilen Speicherbereich der Chipkarte gespeichert ist.

8. Verfahren nach einem der vorhergehenden Ansprüche, wobei das Resultat der Entschlüsselung ein nicht zutreffender zweiter Kommunikationsparameter (K2; D2, KA2) ist, wenn die erste Kennung nicht zutreffend ist, wobei durch den zweiten Kommunikationsparameter ein nicht zutreffender zweiter Kommunikationskanal (146) durch die Chipkarte definierbar ist, mit folgenden weiteren Schritten:
- Sendung eines Chipkarten-Kommandos (122) von dem Chipkarten-Terminal an die Chipkarte auf dem geschützten ersten Kommunikationskanal,
- Ignorierung des Chipkarten-Kommandos durch die Chipkarte und Reduzierung der Anzahl der verbleibenden Fehlbedienungen, wobei die Chipkarte oder eine Chipkartenfunktion der Chipkarte bei Überschreitung einer vorgegebenen Anzahl von Fehlbedienungen gesperrt wird.

9. Chipkarte mit
- einer Schnittstelle (106) zur Kommunikation über einen vordefinierten Kommunikationskanal (108) und mehreren weiteren Kommunikationskanälen (112, 146,...) mit einem Chipkarten-Terminal (100),
- Mitteln (132, 136) zur Entschlüsselung eines auf dem vordefinierten Kanal empfangenen Chiffrats, welches mit Hilfe eines ersten symmetrischen Schlüssel verschlüsselt ist, der von einer zuvor in den Chipkarten-Terminal eingegebenen ersten Kennung abgeleitet ist, mit Hilfe eines zweiten symmetrischen Schlüssels (S2), wobei die Entschlüsselung zumindest einen Kommunikationsparameter ergibt (K2; KA2, D2), wenn die zuvor in den Chipkarten-Terminal eingegebene erste Kennung (116) zutreffend ist und der erste symmetrische Schlüssel dem zweiten symmetrischen Schlüssel gleicht, wobei durch den Kommunikationsparameter einer der weiteren Kommunikationskanäle für die geschützte Kommunikation zwischen der Chipkarte und dem Chipkarten-Terminal eindeutig festgelegt ist, wobei durch den ersten Kommunikationsparameter ein öffentlicher Schlüssel angegeben wird, und
- Mitteln (132) zur Durchführung eines Diffie-Hellman-Verfahrens zur Ableitung eines weiteren symmetrischen Schlüssels (S4) mit Hilfe des öffentlichen Schlüssels.

10. Chipkarte nach Anspruch 9, mit Mitteln (150) zur Durchführung eines diskreten logarithmischen kryptografischen Verfahrens zur Erzeugung des weiteren symmetrischen Schlüssels (S4) aus Domainparametern, die durch den ersten Kommunikationsparameter angegeben werden, wobei der weitere symmetrische Schlüssel zur symmetrischen Verschlüsselung der Kommunikation zwischen dem Chipkarten-Terminal und der Chipkarte über den festgelegten Kommunikationskanal (112) vorgesehen ist.

11. Chipkarte nach einem der vorhergehenden Ansprüche 9 oder 10, mit einem nicht flüchtigen geschützten Speicherbereich zur Speicherung einer zweiten Kennung (140), aus der der zweite Schlüssel ableitbar ist.

12. Chipkarte nach einem der vorhergehenden Ansprüche 9 bis 11, mit einem Fehlbedienungs-Zähler (144) zur Sperrung der Chipkarte, wenn die Anzahl der Fehlbedienungen einen vorgegebenen Schwellwert erreicht hat, wobei eine von der Chipkarte empfangene Nachricht, die auf einem der weiteren Kommunikationskanäle, welcher nicht der festgelegt Kommunikationskanal ist, an die Chipkarte gesendet wird, als Fehlbedienung gezählt wird.

13. Chipkarte nach einem der vorhergehenden Ansprüche 9 bis 12, mit einer Erstbenutzerfunktion, wobei in einem Erstbenutzungszustand, ein bestimmter Kommunikationsparameter für eine erste Wahl des ersten Kommunikationskanals festgelegt ist, und wobei die Chipkarte aus ihrem Erstbenutzungszustand in einen Benutztzustand übergeht, wenn sie zum ersten Mal ein Chipkartenkommando (122) auf diesem ersten Kommunikationskanal empfängt.

14. Chipkarten-Terminal mit
- Mitteln (114) zur Eingabe einer ersten Kennung (116),
- Mitteln zur Erzeugung eines Chiffrats aus zumindest einem ersten Kommunikationsparameter (K1; KA1, D1) mit Hilfe eines aus der ersten Kennung abgeleiteten ersten symmetrischen Schlüssels (S1), wobei mit Hilfe des Kommunikationsparameters ein geschützter erster Kommunikationskanal (112) zwischen dem Chipkarten-Terminal und der Chipkarte (104) definierbar ist,
- Mitteln zum Senden des Chiffrats über einen vordefinierten Kommunikationskanal (108) an die Chipkarte,
- Mitteln (148) zur Erzeugung von Domainparametern (D1) für die Durchführung eines diskreten logarithmischen kryptographischen Verfahrens für die Ableitung eines weiteren symmetrischen Schlüssels (S3) zur Verschlüsselung der Kommunikation zwischen dem Chipkarten-Terminal und der Chipkarte, wobei der erste Kommunikationsparameter die Domainparameter angibt.

## Claims

1. A method for protecting a chip card (104) against unauthorised use, comprising the following steps:
- inputting a first identifier (116) into a chip card terminal (100),
- generating a cipher from at least one first communication parameter (K1; KA1, D1) with the aid of a first symmetric key (S1) derived from the first identifier, wherein a protected first communication channel (112) between the chip card terminal and the chip card can be defined with the aid of the communication parameter,
- transferring the cipher from the chip card terminal to the chip card via a predefined communication channel (108),
- attempting to decrypt the cipher with the aid of a second symmetric key (S2) by means of the chip card, wherein the result of the decryption is the first communication parameter only if the first symmetric key is the same as the second symmetric key, so that the protected first communication channel between the chip card terminal and the chip card can be defined only if the first identifier is correct,
**characterised in that** the first communication parameter is a public key of the chip card terminal, wherein the chip card, in the case that the decryption of the cipher is successful, derives a further symmetric key (S4) from the public key according to the Diffie-Hellman (DH) method in order to encrypt the communication between the chip card terminal and the chip card, wherein the first communication channel is defined by the encryption with the further symmetric key.

2. The method according to claim 1, wherein the first communication parameter is a first domain parameter (D1) for the execution of a discrete logarithmic cryptographic method for generation of a third symmetric key (S3) by the chip card terminal and of a fourth symmetric key (S4) by the chip card, wherein the third and fourth symmetric keys are identical if the first identifier is correct, wherein the third and fourth symmetric keys are provided for encrypting the communication between the chip card terminal and the chip card via the protected first communication channel.

3. The method according to claim 2, wherein the discrete logarithmic cryptographic method is an elliptical curve cryptographic method.

4. The method according to claim 2 or 3, wherein the discrete logarithmic cryptographic method is an elliptical curve Diffie-Hellman method.

5. The method according to any one of the preceding claims, wherein the first identifier is used as seed value for the derivation of the first symmetric key by the chip card terminal.

6. The method according to any one of the preceding claims, wherein a second identifier (140) is stored on the chip card and the second symmetric key can be derived from said second identifier.

7. The method according to any one of the preceding claims, wherein the second symmetric key is stored in a protected non-volatile memory region of the chip card.

8. The method according to any one of the preceding claims, wherein the result of the decryption is an incorrect second communication parameter (K2; D2, KA2) if the first identifier is incorrect, wherein an incorrect second communication channel (146) can be defined by the chip card by means of the second communication parameter, said method comprising the following further steps:
- sending a chip card command (122) from the chip card terminal to the chip card over the protected first communication channel,
- ignoring the chip card command by the chip card and reducing the number of remaining operating errors, wherein the chip card or a chip card function of the chip card is blocked when a predetermined number of operating errors is exceeded.

9. A chip card, comprising
- an interface (106) for communication with a chip card terminal (100) via a predefined communication channel (108) and a plurality of further communication channels (112, 146, ...),
- means (132, 136) for decrypting, with the aid of a second symmetric key (S2), a cipher received over the predefined channel, which cipher is encrypted with the aid of a first symmetric key derived from a first identifier input previously into the chip card terminal, wherein the decryption gives at least one communication parameter (K2; KA2, D2) if the first identifier (116) previously input into the chip card terminal is correct and the first symmetric key is the same as the second symmetric key, wherein one of the further communication channels for the protected communication between the chip card and the chip card terminal is clearly determined by the communication parameter, wherein a public key is specified by the first communication parameter, and
- means (132) for carrying out a Diffie-Hellman method for deriving a further symmetric key (S4) with the aid of the public key.

10. The chip card according to claim 9, comprising means (150) for carrying out a discrete logarithmic cryptographic method for generating the further symmetric key (S4) from domain parameters which are specified by the first communication parameter, wherein the further symmetric key is provided for the symmetric encryption of the communication between the chip card terminal and the chip card via the determined communication channel (112).

11. The chip card according to any one of the preceding claims 9 or 10, comprising a non-volatile protected memory region for storing a second identifier (140), from which the second key can be derived.

12. The chip card according to any one of the preceding claims 9 to 11, comprising an operating error counter (144) for blocking the chip card if the number of operating errors has reached a predetermined threshold value, wherein a message received by the chip card and which is sent to the chip card over one of the further communication channels which is not the determined communication channel is counted as an operating error.

13. The chip card according to any one of the preceding claims 9 to 12, comprising a first user function, wherein, in a state of first use, a specific communication parameter is determined for a first selection of the first communication channel, and wherein the chip card transitions from its state of first use into a used state when it receives a chip card command (122) over this first communication channel for the first time.

14. A chip card terminal, comprising
- means (114) for inputting a first identifier (116),
- means for generating a cipher from at least one first communication parameter (K1; KA1, D1) with the aid of a first symmetric key (S1) derived from the first identifier, wherein a protected first communication channel (112) between the chip card terminal and the chip card (104) can be defined with the aid of the communication parameter,
- means for sending the cipher to the chip card via a predefined communication channel (108),
- means (148) for generating domain parameters (D1) for the execution of a discrete logarithmic cryptographic method for the derivation of a further symmetric key (S3) for encryption of the communication between the chip card terminal and the chip card, wherein the first communication parameter specifies the domain parameter.

## Revendications

1. Procédé destiné à la protection d'une carte à puce (104) contre une utilisation non autorisée avec les étapes suivantes :
- entrée d'une première identification (116) dans un terminal de cartes à puce (100),
- création d'un cryptogramme à partir d'au moins un premier paramètre de communication (K1 ; KA1, D1) à l'aide d'une première clé symétrique (S1) dérivée de la première identification, où un premier canal de communication (112) protégé peut être défini entre le terminal de carte à puce et la carte à puce à l'aide du paramètre de communication,
- transmission du cryptogramme par l'intermédiaire d'un canal de communication prédéfini (108) du terminal de carte à puce vers la carte à puce,
- tentative d'un déchiffrement du cryptogramme à l'aide d'une deuxième clé symétrique (S2) par la carte à puce, où le résultat du déchiffrement n'est le premier paramètre de communication que si la première clé symétrique ressemble à la deuxième clé symétrique, de sorte que le premier canal de communication protégé ne peut être défini entre le terminal de carte à puce et la carte à puce que si la première identification est exacte,
**caractérisé en ce que**,
dans le cas du premier paramètre de communication, il s'agit d'une clé publique du terminal de carte à puce, où la carte à puce, dans le cas où le déchiffrement du cryptogramme réussit, déduit une nouvelle clé symétrique (S4) à partir de la clé publique selon le procédé de Diffie-Hellman (DH) pour le chiffrement de la communication entre le terminal de carte à puce et la carte à puce, où, le premier canal de communication est défini avec la nouvelle clé symétrique par le chiffrement.

2. Procédé selon la revendication 1, dans lequel, dans le cas du premier paramètre de communication, il s'agit d'un premier paramètre de domaine (D1) pour l'exécution d'un procédé cryptographique logarithmique discret pour la création d'une troisième clé symétrique (S3) par le terminal de carte à puce et d'une quatrième clé symétrique (S4) par la carte à puce et, où les troisième et quatrième clés symétriques sont identiques lorsque la première identification est exacte, où les troisième et quatrième clés symétriques sont prévues pour le chiffrement de la communication entre le terminal de carte à puce et la carte à puce par l'intermédiaire du premier canal de communication.

3. Procédé selon la revendication 2, dans lequel, dans le cas du procédé cryptographique logarithmique discret, il s'agit d'un procédé cryptographique de courbes elliptiques.

4. Procédé selon la revendication 2 ou 3, dans lequel, dans le cas du procédé cryptographique logarithmique discret, il s'agit d'un procédé de Diffie-Hellman de courbes elliptiques.

5. Procédé selon l'une des revendications précédentes, dans lequel la première identification est employée en tant que valeur de départ (seed value) pour la dérivation de la première clé symétrique par le terminal de carte à puce.

6. Procédé selon l'une des revendications précédentes, dans lequel une deuxième identification (140) est mémorisée sur la carte à puce, à partir de laquelle la deuxième clé symétrique peut être dérivée.

7. Procédé selon l'une des revendications précédentes, dans lequel la deuxième clé symétrique est stockée dans une région de mémoire non volatile protégée de la carte à puce.

8. Procédé selon l'une des revendications précédentes, dans lequel le résultat du déchiffrement est un deuxième paramètre de communication (K2 ; D2, KA2) non exact lorsque la première identification n'est pas exacte, où un deuxième canal de communication (146) non exact peut être défini par la carte à puce par l'intermédiaire du deuxième paramètre de communication, avec les autres étapes suivantes :
- envoi d'une commande de carte à puce (122) du terminal de carte à puce vers la carte à puce sur le premier canal de communication protégé,
- ignorance de la commande de carte à puce par la carte à puce et réduction du nombre des cas d'échec restants, où la carte à puce ou une fonction de carte à puce de la carte à puce est bloquée lors d'un dépassement d'un nombre prédéfini de cas d'échec.

9. Carte à puce avec
- une interface (106) pour une communication par l'intermédiaire d'un canal de communication (108) prédéfini et plusieurs autres canaux de communication (112, 146,...) avec un terminal de carte à puce (100),
- des moyens (132, 136) pour le déchiffrement d'un cryptogramme reçu sur un canal prédéfini, lequel est chiffré à l'aide d'une première clé prédéfinie, qui est dérivée d'une première identification indiquée auparavant dans le terminal de carte à puce à l'aide d'une deuxième clé symétrique (S2), où le déchiffrement donne au moins un paramètre de communication (K2 ; KA2, D2) lorsque la première identification (116) indiquée précédemment dans le terminal de carte à puce est exacte et que la première clé symétrique ressemble à la deuxième clé symétrique,
où, par le paramètre de communication, un des autres canaux de communication est établi de manière univoque pour la communication protégée entre la carte à puce et le terminal de carte à puce, où une clé publique est indiquée par le premier paramètre de communication, et
- des moyens (132) pour l'exécution d'un procédé de Diffie-Hellman pour la dérivation d'une nouvelle clé symétrique (S4) à l'aide de la clé publique.

10. Carte à puce selon la revendication 9, avec des moyens (150) pour l'exécution d'un procédé cryptographique logarithmique discret pour la création d'une nouvelle clé symétrique (S4) à partir de paramètres de domaine qui sont indiqués par le premier paramètre de communication, où la nouvelle clé symétrique est prévue pour un chiffrement symétrique de la communication entre le terminal de carte à puce et la carte à puce par l'intermédiaire d'un canal de communication (112) déterminé.

11. Carte à puce selon l'une des revendications précédentes 9 ou 10, avec une région de mémoire non volatile protégée pour le stockage d'une deuxième identification (140) à partir de laquelle la deuxième clé peut être dérivée.

12. Carte à puce selon l'une des revendications précédentes 9 à 11, avec un compteur de cas d'échec (144) pour le blocage de la carte à puce lorsque le nombre de cas d'échec atteint une valeur de seuil prédéterminée, où une information reçue par la carte à puce qui est envoyée à la carte à puce sur l'un des autres canaux de communication, qui n'est pas le canal de communication fixé, est comptée comme un cas d'échec.

13. Carte à puce selon l'une des revendications précédentes 9 à 12, avec une fonction de première utilisation, où, dans un état de première utilisation, un paramètre de communication défini est fixé pour un premier choix du premier canal de communication , et où la carte à puce passe dans un état d'utilisation à partir d'un état de première utilisation lorsqu'elle reçoit pour la première fois une commande de carte à puce (122) sur ce premier canal de communication.

14. Terminal de carte à puce avec
- des moyens (114) pour l'entrée d'une première identification (116),
- des moyens pour la création d'un cryptogramme à partir d'au moins un premier paramètre de communication (K1 ; KA1, D1) à l'aide d'une première clé symétrique (S1) dérivée de la première identification, où, avec l'aide du paramètre de communication, un premier canal de communication (112) protégé peut être défini entre le terminal de carte à puce et la carte à puce (104),
- des moyens pour l'envoi du cryptogramme vers la carte à puce par l'intermédiaire d'un canal de communication (108) prédéfini,
- des moyens (148) pour la création de paramètres de domaine (D1) pour l'exécution d'un procédé cryptographique logarithmique discret pour la dérivation d'une nouvelle clé symétrique (S3) pour le chiffrement de la communication entre le terminal de carte à puce et la carte à puce, où le premier canal de communication indique les paramètres de domaine.
